# EUROPÄISCHE PATENTANMELDUNG

(11) **EP 2 239 124 A1**
(43) Veröffentlichungstag der Anmeldung: **13.10.2010**
(21) Anmeldenummer: 09008917.8
(22) Anmeldetag: 08.07.2009
(51) Int. Cl.: B29C 45/17

(54) **Verfahren zum Formen von Kunststoffteilen**

(30) Priorität: 08.04.2009 DE 102009016908
(71) Anmelder: Linde AG, 80331 München (DE)
(72) Erfinder: Praller, Andreas, 82110 Germering (DE); Orsén, Mikael, 23136 Trelleborg (SE)
(74) Vertreter: Schüssler, Andrea

(57) **Zusammenfassung**

Bei einem erfindungsgemäßen Verfahren zum Formen von Kunststoffteilen wird eine Formmasse in eine Form eingespritzt, ein Druckgas zum Ausformen der Form in die Form injiziert und die Formmasse durch Abkühlung verfestigt. Als Druckgas wird eine Zusammensetzung aus einem inerten Gas und einem oder mehreren Funktionsgasen verwendet, wobei das inerte Gas den überwiegenden Volumenanteil an der Zusammensetzung einnimmt.

## Beschreibung

Die vorliegende Erfindung betrifft ein Verfahren zum Formen von Kunststoffteilen, insbesondere zum Spritzgießen von Kunststoffteilen mit dem Gasinjektionsverfahren, das auch als Gasinnendruckverfahren bezeichnet wird.

Für das Gasinjektionsverfahren sind in der Regel alle Standardspritzgießmaschinen geeignet, die eine Einrichtung zum Einbringen eines Gases aufweisen. Die Gasinjektion kann über eine Maschinendüse oder über einen separaten Injektionsbaustein im Werkzeug erfolgen. Das Verfahren beginnt mit dem Einspritzen einer Kunststoffformmasse in eine Kavität bzw. Form. Es werden ca. 70% +/-20% des Volumens der Kavität mit Formmasse befüllt. Kurz vor Beendigung der Einspritzphase beginnt die Gasinjektionsphase. Die kurze Überschneidung von Einspritz- und Gasinjektionsphase soll einen Geschwindigkeitseinbruch der Fließfront und eine damit verbundene Umschaltmarkierung verhindern. Die Gaseinleitung erfolgt am sinnvollsten in Bereichen großer Schmelzeansammlungen. Das Gas füllt die Kavität, indem es die Schmelzfront weiter nach vorne treibt. Auf diese Weise lassen sich gezielt hergestellte Hohlräume in Formteilen erzeugen. Ist die Kavität vollständig gefüllt, beginnt die Gasnachdruckphase. Diese Druckphase erfolgt bei einem Gasdruck von maximal 300 bar und wird so lange ausgeübt, bis das Teil dimensionsstabil ist. Der Gasdruck ist hierbei über den gesamten Gaskanal konstant. Durch die relativ geringen Gasdrücke entstehen niedrige Werkzeuginnendrücke, die wiederum geringe Schließkräfte der Spritzgießmaschine erfordern. Nach dem Erstarren der Schmelze wird der Gasdruck abgebaut. Dies geschieht entweder, indem das Gas an die Umgebung abgegeben wird oder indem ein gewisser Anteil über die Maschinendüse oder Werkzeugdüse zurück gewonnen wird.

Neben den Gasinjektionsverfahren, die auch als Aufblasverfahren oder Teilfüllverfahren bezeichnet werden, gibt es auch noch die in der Industrie überwiegend verwendeten Schmelzeausblasverfahren mit Nebenkavitäten bzw. Überlaufkavitäten und die Schmelzerückdrückverfahren.

Bei den Schmelzeausblasverfahren ist eine zweite Kavität vorgesehen, die über einen Leitungsabschnitt mit der ersten Kavität verbunden ist. Das Volumen der ersten Kavität wird in der Regel bis zu 100% mit Formmasse befüllt. Beim anschließenden Beaufschlagen mit Gas wird die überschüssige Formmasse über den Leitungsabschnitt in die zweite Kavität verdrängt. Auf dies Weise werden Umschaltmarkierungen vermieden.

Bei den Schmelzerückdrückverfahren wird die erste Kavität in der Regel ebenfalls zu 100% mit Formmasse befüllt. Die überschüssige Formmasse wird durch das einströmende Gas zurück in die Schnecke gedrängt.

In der WO 90/07415 ist ein Verfahren und eine Vorrichtung zum Spritzgießen eines hohlen, geformten Gegenstandes beschrieben. Die Vorrichtung umfasst einen mehrstufigen Verdichter, der an seiner Saugseite Gas ansaugt und Druckgas an einer Abgabeseite abgibt, eine Gasdüse und eine Einspritzdüse, die mit der Abgabeseite des mehrstufigen Verdichters verbunden sind. Des weiteren umfasst die Vorrichtung eine Form in die geschmolzenes Kunstharz über die Einspritzdüse und Druckgas über die Gasdüse eingeleitet wird. Ein erstes Schaltventil ist zwischen der Abgabeseite des mehrstufigen Verdichters und der Gasdüse angeordnet. Das erste Schaltventil ist mit der Gasdüse über eine Gasleitung verbunden, die ein zweites Schaltventil und einen Rückgewinnungsbehälter aufweist. Die Gasleitung ist mit ihrem vorderen Ende an der Saugseite des mehrstufigen Verdichters angeschlossen. Beim Verfahren zum Spritzgießen eines hohlen, geformten Gegenstandes sind Stickstoff oder Kohlendioxid als Druckgas vorgesehen.

In der DE 199 17 916 B4 ist ein Verfahren zur Herstellung einer Kunststoffflasche und eine damit herstellbare Flasche beschrieben. Bei diesem Verfahren ist vorgesehen, einen Preformling mittels Spritzgießen zu erzeugen und diesen anschließend in eine nicht rotationssymmetrische Blasform einzusetzen. Wobei beim Blasformen zum Erzeugen der Kunststoffflasche Druckluft verwendet wird, die durch die zukünftige Flaschenöffnung eingeblasen wird. Auf diese Weise wird die Flasche thermoplastisch ausgeformt.

Aus der DE 101 17 550 A1 geht die Herstellung von Spritzgussteilen mittels eines Gasinjektionsverfahrens hervor. Bei diesem Verfahren zum Herstellen von Spritzgussteilen mit ganz oder teilweise geschlossenen Hohlräumen ist vorgesehen, dass ein Metall der ersten Hauptgruppe des Periodensystems der Elemente oder eine seiner ebenfalls mit Wasser reagierenden Verbindung und eine Dosis Wasser während oder nach dem Einsprühvorgang der Schmelze in einem Werkzeuginnenraum derart zusammen gebracht werden, dass Metall und Wasser unter Freisetzung von Wasserstoff derart reagieren, dass eine Explosion erfolgt. Mittels dieser Explosion wird die Schmelze gegen die Außenwand bzw. die Außenwände des Werkzeuginnenraums gedrückt.

Nachteilig bei den aus den Stand der Technik bekannten Verfahren ist, dass einige Kunststoffe nach der Gasinjektion beim Druckabbau des Druckgases eine Flüssigkeit bilden, welche eine bräunliche Farbe aufweist. Die braune Flüssigkeit wird zumeist durch in der Form verbleibenden Sauerstoff oder Wasser gebildet, der mit bestimmten Bestandteilen des Kunststoffmaterials bzw. darin enthaltener Additive bzw. Zusatzstoffe reagieren kann. Es kann auch zu einer Degradation der Kunststoffe aufgrund der Reaktionen mit Sauerstoff und/oder Wasser kommen.

Wie es aus obigem hervorgeht, ist es bekannt Druckluft, Stickstoff oder Kohlendioxid als Druckgas zu verwenden. Druckluft hat sich aufgrund seiner reaktiven Bestandteile nicht bewährt. In der Praxis wird fast ausschließlich Stickstoff verwendet, da er inert ist und einfach und kostengünstig verfügbar ist.

Ein weiterer Nachteil der aus dem Stand der Technik bekannten Verfahren ist die geringe Wärmeaufnahmefähigkeit des Stickstoff, die zu einer geringen Kühlung des Kunststoffes von innen durch den unter Druck stehenden Stickstoff führt.

Ein weiteres Problem des Standes der Technik ist das Aufschäumen der Innenoberfläche des Kunststoffs im Bereich des Hohlraums. Dabei dringt das unter hohem Druck stehende Druckgas, das in der Regel Stickstoff ist, in die Schmelze ein und löst sich dort. Bei der Druckentlastung am Ende des Gasinjektionszyklus expandiert das gelöste Druckgas schlagartig und es kommt zu einer ungleichmäßigen und aufgeschäumten Oberfläche, die bei manchen Anwendungen störend wirkt.

Beim sog. Gasspülen oder Innenkühlen strömt Stickstoff unter hohem Druck durch den Gaskanal. Bei manchen Kunststoffen wie z.B. Polypropylen (PP) kann es zum Verstopfen der Gasinjektoren kommen. Ursache dieser Verstopfung ist neben der eben beschriebenen Aufschäumung des Kunststoffes ein stärkeres Fließen der gasbeladenen Kunststoffschmelze aufgrund der Absenkung der Viskosität der Schmelze durch gelöstes Gas.

Aufgabe der vorliegenden Erfindung ist es daher, ein Verfahren bereit zu stellen, mit dem mittels des Gasinnendruckverfahrens Kunststoffformteile höherer Qualität herstellbar sind.

Eine weitere Aufgabe der vorliegenden Erfindung ist es, die Bildung einer für das Kunststoffformteil schädlichen Flüssigkeit durch den Gasinjektionsprozess zu verhindern. Aufgrund dieser Flüssigkeit läuft der Prozess zur Herstellung eines Kunststoffformteils weniger stabil ab. Dies führt zu einem höheren Ausschuss und einem höheren Wartungs- und Reinigungsaufwand.

Eine weitere Aufgabe der vorliegenden Erfindung ist es den Formvorgang zu optimieren.

Eine weitere Aufgabe der vorliegenden Erfindung ist es, das Aufschäumen der inneren Oberfläche des Kunststoffformteils im Bereich des Hohlraums zu verhindern.

Eine weitere Aufgabe der vorliegenden Erfindung ist es, beim sog. Gasspülen oder Innenkühlen, bei dem Stickstoff unter hohem Druck durch den Gaskanal strömt, ein Verstopfen der Bauteile, insbesondere der Gasinjektoren zu verhindern.

Eine oder mehrere der vorgenannten Aufgaben werden durch ein Verfahren gemäß Anspruch 1 und ein Druckgas gemäß Anspruch 11 gelöst. Vorteilhafte Ausgestaltungen sind in den Unteransprüchen angegeben.

Bei einem erfindungsgemäßen Verfahren zum Formen von Kunststoffteilen wird eine Formmasse in eine Form eingespritzt, ein Druckgas zum Ausformen der Form in die Form injiziert und die Formmasse durch Abkühlung verfestigt. Als Druckgas wird eine Zusammensetzung aus einem inerten Gas und einem oder mehreren Funktionsgasen verwendet, wobei das inerte Gas den überwiegenden Volumenanteil an der Zusammensetzung einnimmt.

Durch die Kombination aus einem inerten Gas und einem Funktionsgas ist es möglich das Druckgas auf das Kunststoffmaterial bzgl. dessen späterer Funktion abzustimmen

Die Aufgabe hinsichtlich schädlicher Reaktionen und der Bildung einer schädlichen Flüssigkeit wird durch die Verwendung eines reduzierenden Gases als Funktionsgas gelöst. Auf diese Weise werden die oxidierenden Bestandteile reduziert, so dass Sie nicht mehr mit Bestandteilen des Kunststoffs reagieren. Schädliche zur Degradation des Kunststoffteils führende Reaktionen und die Bildung der braunen Flüssigkeit wird sicher und zuverlässig vermieden. Somit können hochwertige Kunststoffformteile bereit gestellt werden. Der Wartungs- und Reinigungsaufwand der Maschinen wird reduziert. Die Prozesse laufen stabiler ab, wodurch der Ausschuss reduziert wird. Hierfür geeignet sind z.B. Wasserstoff (H₂), Kohlenmonoxid (CO) und Ammoniak (NH₃). Die Aufgabe hinsichtlich der Optimierung des Formvorgangs wird dadurch gelöst, dass als Funktionsgas ein Gas mit einer hohen Wärmeleitfähigkeit verwendet wird, um eine bessere Abkühlung des Kunststoffformteils von innen durch das Druckgas im Gaskanal zu erreichen. Geeignete Gase hierfür sind Zusammensetzungen aus z.B. Stickstoff (N₂), Kohlendioxid (CO₂) Helium (He), Argon (Ar) und Wasserstoff (H₂). Der Anteil an Wasserstoff im Druckgas sollte aus Sicherheitsgründen maximal 15 % und vorzugsweise maximal 10% betragen. Helium und Argon sind inerte Gase. Sie weisen jedoch auch funktionelle Eigenschaften, wie eine gute Wärmeleitung auf, so dass sie im Zusammenhang mit der vorliegenden Erfindung auch als Funktionsgase betrachtet werden.

Die Aufgabe hinsichtlich des Aufschäumens der inneren Oberfläche des Kunststoffformteils wird dadurch gelöst, dass als Funktionsgas dem Druckgas ein Gas beigemischt wird, das die Löslichkeit des Druckgases in der Kunststoffschmelze herabsetzt. Auf diese Weise wird die Oberflächenqualität im Inneren des Kunststoffformteils verbessert, d.h. die Oberfläche weist eine geringere Rauhigkeit auf. Als entsprechende Funktionsgase sind z.B. He und H₂ geeignet.

Die Aufgabe hinsichtlich des Verstopfens der Bauteile wird dadurch gelöst, dass ein Aufschäumen bzw. eine Schaumbildung vermieden wird und das Fließverhalten der Schmelze durch eine Erhöhung der Viskosität der Schmelze durch Verwendung eines erfindungsgemäßen Druckgases derart beeinflusst, dass ein Fliessen der Kunststoffformmasse durch Einlagerung von Gas verhindert bzw. verringert wird. Als Funktionsgase sind z.B. He und H₂ geeignet.

Bei der Verwendung von CO₂ im erfindungsgemäßen Druckgas kommt es durch die bessere Kühlwirkung zu einer schnelleren Abkühlung der Kunststoffformmasse bzw. der oberflächennahen Schmelzschicht. Hierdurch wird ebenfalls ein geringeres Fließen der Kunststoffformmasse bewirkt.

Bei der Verarbeitung von Polycarbonat (PC) und bei Acrylnitril-Butadien-Styrol (ABS) ist vorzugsweise Stickstoff (N₂) und/oder Wasserstoff (H₂) im Druckgas enthalten. Bei der Verarbeitung von Polypropylen (PP) ist vorzugsweise CO₂ im Druckgas enthalten.

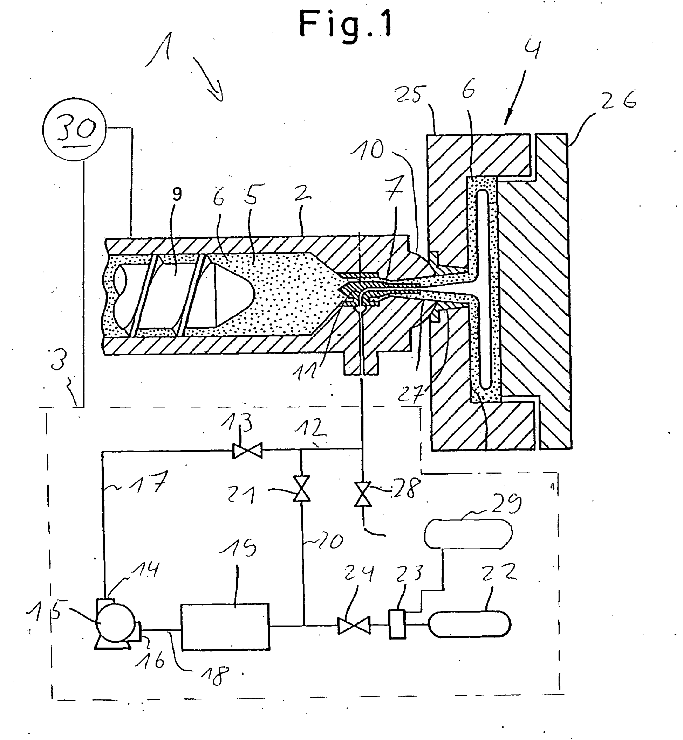

Das erfindungsgemäße Verfahren wird im folgenden anhand einer einzigen Figur erläutert, die eine erfindungsgemäße Vorrichtung zum Spritzgießen eines hohlen, geformten Gegenstandes zeigt.

Im Folgenden wird die erfindungsgemäße Vorrichtung 1, die zum Ausführen des erfindungsgemäßen Verfahrens geeignet ist, beschrieben.

Die Vorrichtung 1 umfasst eine Einspritzeinrichtung 2, eine damit verbundene Einrichtung zum Zuführen von Druckgas 3 und eine Kunststoffform 4.

Die Einspritzeinrichtung 2 weist einen Raum 5 zum Aufnehmen von Kunststoffrohmasse 6 auf. Der Raum 5 mündet in eine ringförmig ausgebildete Einspritzdüse 7 zum Ausgeben der Kunststoffrohmasse 6. In dem Raum 5 ist eine Schnecke 9 zum Fördern der Kunststoffrohmasse 6 in Richtung der Einspritzdüse 7 angeordnet. Die Einspritzdüse 7 ist an einer Ausgabeseite 10 der Einspritzeinrichtung 2 angeordnet ist.

Mittig in der ringförmigen Einspritzdüse 7 ist eine Gasdüse 11 zum Anformen des Kunststoffformmaterials 6 an die Kunststoffform 4 vorgesehen.

Die Gasdüse 11 ist über einen Leitungsabschnitt 12 mit einem ersten Schaltventil 13 mit der Einrichtung zum Zuführen von Druckgas 3 verbunden. Das erste Schaltventil 13 ist über einen Leitungsabschnitt 17 mit der Abgabeseite 14 eines mehrstufigen Verdichters 15 verbunden. Eine Saugseite 16 des mehrstufigen Verdichters 15 ist über einen Leitungsabschnitt 18 mit einem Rückgewinnungsbehälter 19 verbunden. Der Rückgewinnungsbehälter 19 ist über einen Leitungsabschnitt 20, in den ein zweites Schaltventil 21 integriert ist, mit dem Leitungsabschnitt 12 zwischen der Gas- bzw. Injektionsdüse 11 und dem ersten Schaltventil 13 verbunden.

Es ist eine erste Gasquelle 22 und eine zweite Gasquelle 29 vorgesehen. Die erste Gasquelle 22 und die zweite Gasquelle 29 sind über eine Mischeinrichtung 23 zum Mischen zumindest zweier Gase und ein drittes Schaltventil 24 mit dem Leitungsabschnitt 20 zwischen Rückgewinnungsbehälter 19 und dem zweiten Schaltventil 20 verbunden. In den Gasquellen 22, 29 sind dem jeweiligen Zweck angepasste Gase und/oder Gasmischungen enthalten. Es kann auch eine einzige Gasquelle vorgesehen sein, die zum Aufnehmen und Abgeben eines die gewünschten Eigenschaften aufweisenden Druckgases ausgebildet ist. Es können auch mehrere Gasquellen vorgesehen sein, die mit einem oder mehreren Mischeinrichtungen verbunden sind.

Die Einspritzeinrichtung 2 und die Einrichtung zum Zuführen eines Druckgases 3 sind mit einer Steuereinrichtung 30 verbunden. Die Steuereinrichtung 30 ist unter anderem zum Steuern der Mischeinrichtung 23 und der Einspritzeinrichtung ausgebildet.

An den Leitungsabschnitt 12 ist ein Ventil 28 angeschlossen, das in die Umgebung mündet.

Die Form 4 ist zweiteilig aus einem Mutterformteil 25 und einem Vaterformteil 26 ausgebildet. Das Mutterformteil 25 weist einen Einguss 27 auf, der der Einspritzdüse 7 gegenüberliegend angeordnet ist. Über den Einguss 27 ist die Form 4 mit der Kunststoffmasse 6 befüllbar.

Im Folgenden wird das erfindungsgemäße Verfahren anhand der Vorrichtung beispielhaft beschrieben. Das erfindungsgemäße Verfahren ist insbesondere für Verfahren mit Nebenkavitäten und für Schmelzerückdrückverfahren geeignet.

Die Einspritzdüse 7 wird durch Verfahren der Einspritzeinrichtung 2 bezüglich des Eingusses 27 der Form 4 derart angeordnet, dass sich beide flüssigkeitsdicht berühren.

Das Kunststoffformmaterial 6 bzw. das geschmolzene Kunstharz kann die Schmelze eines thermoplastischen Harzes, eines thermoplastischen Elastomers oder eines warm aushärtenden Harzes sein. Insbesondere ist die Verwendung von Polyolefinen wie z.B. Polyethylen (PE), Polypropylen (PP) und Plexiglas (PMMA), Polycarbonat (PC), Polyamid (PA), Acrylnitril-Butadien-Styrol (ABS) oder auch von thermoplastischem Polyurethan (PU) oder thermoplastischen Elastomeren auf Urethanbasis (TPU) vorgesehen. Es kann auch vorgesehen sein Zuschlagstoffe, Stabilisatoren, Füllstoffe und Verstärkungsmaterialien wie z.B. Glasfasern zuzusetzen.

Durch kreisförmige Bewegung der Schnecke 9 wird das Kunstharz 6 über die Einspritzdüse 7 und den Einguss 27 in die Form 4 gefördert. Die Temperatur des Kunstharzes kann bis zu 400°C betragen.

Der mehrstufige Verdichter 15 wird angeschaltet und das erste Schaltventil 13 geöffnet. Ein an den Kunststoff und/oder dessen Einsatzgebiet angepasstes Druckgas wird von den Gasquellen 22, 29 bereitgestellt und über die Mischeinrichtung 23 in der richtigen Zusammensetzung zusammengemischt. Von der Mischeinrichtung gelangt Druckgas über das dritte Schaltventil 24 in den Rückgewinnungsbehälter 19 und von dort aus über die Saugseite 16 zum mehrstufigen Verdichter 15. Der mehrstufige Verdichter 15 verdichtet das Druckgas und fördert es über den Leitungsabschnitt 17, das erste Schaltventil 13 und den Leitungsabschnitt 12 hin zur Gasdüse 11 von wo aus es in die Form 4 injiziert wird. Durch das eingebrachte Druckgas wird die Kunststoffformmasse 6 an die Form 4 angeformt.

Die Injektion des Druckgases kann erfolgen, wenn ein Teil der geschmolzenen Kunststoffformmasse 6 die zur Ausgestaltung eines Kunststoffformteils erforderlich ist, in die Form 4 eingespritzt ist und nachfolgend der verbleibende Teil der Kunststoffformmasse eingespritzt wird.

Die Injektion des Druckgases kann auch vorgenommen werden, wenn die zum Formen erforderliche geschmolzene Kunststoffformmasse 6 insgesamt eingespritzt ist.

Es ist auch möglich, das Druckgas entsprechend einem festgesetzten Intervall zu injizieren, nachdem die gesamten Kunststoffformmasse 6 vollständig eingespritzt wurde.

Der Injektionsdruck und die Geschwindigkeit des Druckgases bei der Injektion können über die entsprechenden Schaltventile 13, 21, 24 und insbesondere den Druckminderer 15 eingestellt werden. Durch das Einspritzen des Druckgases legt sich die Kunststoffformmasse 6 an die Form 4 an.

Nach dem Einspritzen der Kunststoffformmasse und der Injektion des Druckgases wird der Druck des Druckgases im Inneren des Kunststoffformteils aufrecht erhalten. Dieser Druck kann bis zu circa 300 bar betragen. Währenddessen verfestigt sich das Kunststoffformteil durch Abkühlung.

Durch die Aufrechterhaltung des Drucks im Inneren des Kunststoffformteils wird die Außenfläche des Kunststoffformteils gegen die Innenfläche der Form gedrückt. Auf diese Weise wird die Formgebung verbessert und eine Reproduzierbarkeit gewährleistet. Der Druck kann durch Steuerung des ersten 13, des zweiten Schaltventils 20, des dritten Schaltventils 24 und des Verdichters 15 aufrechterhalten werden.

Der Druck im Inneren des Kunststoffformteils kann dem Druck während des Verlaufs der Injektion entsprechen. Der Druck kann in einer Höhe aufrechterhalten werden, die geringer ist als der Druck der während der Injektion vorlag. Der Druck kann auch in einer Höhe gehalten werden, die ein wenig höher ist als der Druck, der während des Verlaufs der Injektion vorlag oder der Druck kann auch niedriger sein als der Druck der während des Verlaufs der Injektion vorlag.

Nachdem das Kunststoffformteil vollständig ausgehärtet ist kann das Druckgas im Inneren des Kunststoffformteils über das zweite Schaltventil 13 in den Rückgewinnungsbehälter 18 zurückströmen. Auf diese Weise ist es möglich besonders teure Druckgase mehrmals wiederzuverwenden. Das Druckgas kann auch über das ventil 28 an die Umgebung abgegeben werden.

Nachdem das Druckgas aus dem Kunststoffformteil entwichen ist, kann das zweite Schaltventil 20 geschlossen werden und die Form geöffnet werden. Anschließend kann das Kunststoffformteil entnommen werden.

Die Auswahl des Druckgases erfolgt anhand des zu formenden Kunststoffmaterials und/oder anhand der gewünschten Materialeigenschaften bei der Produktion oder entsprechend der späteren Verwendung. Folgende Parameter lassen sich durch die erfindungsgemäße Druckgaszusammensetzung einstellen:
- das Verhindern schädlicher Reaktionen von Sauerstoff und/oder evtl. Wasser mit dem Kunststoffformmaterial, die zu einer Degradation des Kunststoffformteils führen,
- das Verhindern der Bildung eine bräunlichen Flüssigkeit im Kunststoffformteil während der Herstellung hervorgerufen durch eben beschriebene Reaktionen,
- die Einstellung der gewünschten Zeit die das Kunststoffformteil zum Abkühlen benötigt,
- das Bereitstellen einer glatten nicht aufgeschäumten Innenoberfläche des Kunststoffformteils, und
- die Gewährleistung eines nahezu störungsfreien, zuverlässigen Produktionsablaufs ohne große Ausfallzeiten und viel Ausschuss aufgrund von z.B. Verstopfungen der Gasinjektoren oder anderer Bauteile der Vorrichtung.

Als Druckgas wird eine Zusammensetzung aus einem inerten Gas und einem oder mehreren Funktionsgasen verwendet, wobei das inerte Gas den überwiegenden Volumenanteil an der Zusammensetzung einnimmt.

Durch die Kombination aus einem inerten Gas und einem Funktionsgas ist es möglich das Druckgas auf das Kunststoffmaterial, die spätere Funktion des Kunststoffformteils und/oder die Materialeigenschaften während der Fertigung abzustimmen

Bei einigen Polymeren wie z.B. PE, PP, PC, PC/ABS, ABS, PA, PS kommt es zur Bildung einer bräunlichen Flüssigkeit oder zu einer Degradation des Kunststoffformteils. Diese schädlichen Reaktionen kommen aufgrund der hohen Temperatur von bis zu 400°C und des hohen Drucks von bis zu 350 bar in Verbindung mit im Kunststoffformteil verbleibendem Sauerstoff oder Wasser während des Formens des Kunststoffformteils zustande. Die Degradation des Kunststoffformteils und/oder die Bildung einer schädlichen Flüssigkeit wird durch die Verwendung eines reduzierenden Gases als Funktionsgas verhindert. Durch den Anteil eines reduzierenden Gases im Druckgas werden die oxidierenden Bestandteile reduziert, so dass sie nicht mehr mit Bestandteilen des Kunststoffs reagieren können. Die Bildung der braunen Flüssigkeit wird sicher und zuverlässig vermieden. Somit können hochwertige Kunststoffformteile bereit gestellt werden, da verbleibender Sauerstoff und Wasser gebunden werden. Hierfür geeignet sind z.B. Wasserstoff (H2), Kohlenmonoxid (CO) und Ammoniak (NH3).

Die Abkühlzeit des Formvorgangs des Kunststoffformteils lässt sich verkürzen, indem dem Druckgas ein Funktionsgas mit einer hohen Wärmeleitfähigkeit beigemischt wird. Auf diese Weise wird eine schnellere Abkühlung des Kunststoffformteils von innen durch das Druckgas erreicht. Geeignete Gase hierfür sind z.B. Helium (He) und Argon (Ar).

Eine glatte Innenoberfläche lässt sich dadurch bereitstellen, dass ein Aufschäumen der inneren Oberfläche des Kunststoffformteils verhindert wird. Hierfür wird ein inertes Gas, insbesondere Stickstoff, verwendet, da dieser sich nahezu nicht im Kunststoff löst. Als Funktionsgas wird dem Druckgas ein Gas beigemischt, das die Löslichkeit des Druckgases in der Kunststoffschmelze ebenfalls herabsetzt.Insbesondere ist hier die Beimischung von Ar und/oder He als Funktionsgas zum inerten Gas vorgesehen. Auf diese Weise wird die Oberflächenqualität im Inneren des Kunststoffformteils verbessert, d.h. die Oberfläche weist eine geringere Rauhigkeit auf.

Argon, Helium und Stickstoff sind in der Regel inert. Sie sind daher als Bestandteile des Druckgases geeignet, um ein Aufschäumen des Kunstoffformteils zu verhindern.

Ein Verstopfen der Bauteile der Vorrichtung insbesondere der Einspritzdüse und der Gasdüse bzw. Injektionsdüse wird dadurch gelöst, dass ein Aufschäumen bzw. eine Schaumbildung vermieden wird und/oder das Fließverhalten der Schmelze beeinflusst wird. Durch die Herabsenkung der Viskosität der Schmelze kann ein Verstopfen der Bauteile sicher und effektiv beeinflusst werden. Die Viskosität lässt sich durch die Verwendung eines erfindungsgemäßen. Druckgases herabsetzen bzw. vorteilhaft beeinflussen. Die erfolgt zumeist dadurch, dass ein Gaseinschluss in der Schmelze verhindert wird. Das Fließverhalten der Kunststoffmasse wird derart beeinflusst, dass die Kunststoffformmasse nicht mehr aus der Form in andere Bauteile wie z.B. die Gasinjektionsdüse zurückfließt. Ein Fließen der Schmelze führt zu Verunreinigungen bzw. Verstopfungen, was einen hohen Ausschuss und längere Ausfallzeiten aufgrund von Reinigungsarbeiten nach sich zieht. Bei der Verwendung von CO₂ im erfindungsgemäßen Druckgas kommt es durch die bessere Kühlwirkung zu einer schnelleren Abkühlung der Kunststoffformmasse bzw. der oberflächennahen Schmelzschicht. Hierdurch wird ebenfalls ein geringeres Fließen der Kunststoffformmasse bewirkt. Ein zu starkes Fließen kann unter anderem z.B. bei der Verarbeitung von PP auftreten.

Das Druckgas enthält z.B. bis zu maximal 60 Vol.-%, insbesondere bis zu maximal 50 Vol.-%, insbesondere bis zu maximal 40 Vol.-%, insbesondere bis zu maximal 30 Vol.-%, insbesondere bis zu maximal 20 Vol.-%, insbesondere bis zu maximal 10 Vol.-% und insbesondere bis zu maximal 5 Vol.-% Funktionsgas.

Ferner enthält das Druckgas vorzugsweise bis zu maximal 10 Vol.-% Wasserstoff als Funktionsgas.

Das Druckgas kann auch bis zu maximal 60 Vol.-%, insbesondere bis zu maximal 40 Vol.-%, insbesondere bis zu maximal 20 Vol.-% Argon und/oder bis zu maximal 60 Vol.-%, insbesondere bis zu maximal 40 Vol.-%, insbesondere bis zu maximal 20 Vol.-% Helium enthalten. Das Druckgas kann auch bis zu maximal 50 Vol.-%, insbesondere bis zu maximal 30 Vol.-%, insbesondere bis zu maximal 50 Vol.-% Argon und/oder bis zu maximal 50 Vol.-%, insbesondere bis zu maximal 30 Vol.-%, insbesondere bis zu maximal 10 Vol.-% Helium enthalten. Jedoch sollte der Gesamtanteil von Ar und He im Druckgas nicht mehr als 50 Vol.-% betragen.

Das Druckgas kann auch bis zu maximal 10 Vol.-% Wasserstoff und/oder bis zu maximal 10 Vol.-% Argon und/oder bis zu maximal 10 Vol.-% Helium enthalten.

Das Druckgas kann auch bis zu maximal 10 Vol.-% Wasserstoff und/oder bis zu maximal 10 Vol.-% Argon und/oder bis zu maximal 10 Vol.-% Helium und/oder bis zu maximal 10 Vol.-% einer Kohlenwasserstoffverbindung enthalten.

Das Druckgas kann auch aus einem inerten Gas und einem reduzierenden Gas, wie z.B. Wasserstoff oder Ammoniak, mit einem Anteil von bis zu maximal 5 Vol.% bestehen.

Das Druckgas kann auch aus einem inerten Gas und einem Gas, wie z.B. Argon oder Helium mit einem Anteil von bis zu maximal 5 Vol.% bestehen.

Der Anteil des Funktionsgases beträgt in der Regel zumindest 1 Vol.% vom gesamten Druckgas. Bei einigen Gasen, insbesondere reduzierenden Gasen, wie z.B. Wasserstoff können auch geringere Anteile, wie z.B. im Bereich von 0,1 Vol.% bis zu 1 Vol.%, sinnvoll sein.

Sofern oben nichts anderes angegeben ist bedeuten die Volumen-Prozent-Angaben (Vol.%) den entsprechenden Anteil am gesamten Druckgas.

Mit dem erfindungsgemäßen Verfahren ist es möglich die Degradation sowie die Bildung einer braunen Brühe während des Formvorgangs eines Kunststoffformteils sicher und zuverlässig zu vermeiden.

Mit diesem Verfahren lassen sich für das Gasinjektionsverfahren relevante Größen wie Wärmekapazität des Druckgases, Löslichkeit des Druckgases in der Schmelze, die Schmelzeviskosität über das Druckgas gezielt einstellen und steuern.

### Bezugszeichenliste

- 1: Vorrichtung
- 2: Einspritzeinrichtung
- 3: Druckgas
- 4: Kunststoffform
- 5: Raum
- 6: Kunststoffrohmasse
- 7: Einspritzdüse
- 8:
- 9: Schnecke
- 10: Ausgabeseite
- 11: Gas-/ Injektionsdüse
- 12: Leitungsabschnitt
- 13: Schaltventil
- 14: Abgabeseite
- 15: Verdichter
- 16: Saugseite
- 17: Leitungsabschnitt
- 18: Leitungsabschnitt
- 19: Rückgewinnungsbehälter
- 20: Leitungsabschnitt
- 21: Schaltventil
- 22: Gasquelle
- 23: Mischeinrichtung
- 24: Schaltventil
- 25: Mutterformteil
- 26: Vaterformteil
- 27: Einguss
- 28: Ventil
- 29: Gasquelle
- 30: Steuereinrichtung

## Patentansprüche

1. Verfahren zum Formen von Kunststoffteilen bei dem eine Formmasse in eine Form eingespritzt, ein Druckgas zum Ausformen der Formmasse in die Form injiziert und die Formmasse durch Abkühlen verfestigt wird,
**dadurch gekennzeichnet,**
**dass** als Druckgas eine Zusammensetzung aus einem inerten Gas und einem oder mehreren Funktionsgasen verwendet wird, wobei das Inertgas den überwiegenden Volumenanteil an der Zusammensetzung einnimmt.

2. Verfahren nach Anspruch 1,
**dadurch gekennzeichnet,**
**dass** das inerte Gas Stickstoff oder Kohlendioxid oder ein Gemisch aus Stickstoff und Kohlendioxid ist.

3. Verfahren nach Anspruch 1 oder 2,
**dadurch gekennzeichnet,**
**dass** das Funktionsgas zumindest eines aus der Gruppe bestehend aus Wasserstoff, Kohlenmonoxid, Ammoniak, Argon, Helium und/oder einer Kohlenwasserstoffverbindung ist.

4. Verfahren nach einem der Ansprüche 1 bis 3,
**dadurch gekennzeichnet,**
**dass** das Druckgas bis zu maximal 40 Vol.-%, insbesondere bis zu maximal 30 Vol.-%, insbesondere bis zu maximal 20 Vol.-%, insbesondere bis zu maximal 10 Vol.-% Funktionsgas enthält.

5. Verfahren nach einem der Ansprüche 1 bis 4,
**dadurch gekennzeichnet,**
**dass** das Druckgas bis zu maximal 10 Vol.-% Wasserstoff enthält.

6. Verfahren nach einem der Ansprüche 1 bis 5,
**dadurch gekennzeichnet,**
**dass** das Druckgas bis zu maximal 40 Vol.-% , insbesondere bis zu maximal 20 Vol.-% , insbesondere bis zu maximal 10 Vol.-% Argon und/oder bis zu maximal 40 Vol.-% , insbesondere bis zu maximal 20 Vol.-% , insbesondere bis zu maximal 10 Vol.-% Helium enthält.

7. Verfahren nach einem der Ansprüche 1 bis 6,
**dadurch gekennzeichnet,**
**dass** das Druckgas bis zu maximal 10 Vol.-% Wasserstoff und/oder bis zu maximal 10 Vol.-% Argon und/oder bis zu maximal 10 Vol.-% Helium enthält.

8. Verfahren nach einem der Ansprüche 1 bis 9,
**dadurch gekennzeichnet,**
**dass** das Druckgas bis zu maximal 10 Vol.-% Wasserstoff und/oder bis zu maximal 10 Vol.-% Argon und/oder bis zu maximal 10 Vol.-% Helium und/oder bis zu maximal 10 Vol.-% einer Kohlenwasserstoffverbindung enthält.

9. Verfahren nach einem der Ansprüche 1 bis 8,
**dadurch gekennzeichnet,**
**dass** das Druckgas aus einem inerten Gas und einem reduzierenden Gas, wie z.B. Wasserstoff oder Ammoniak mit einem Anteil von bis zu maximal 5 Vol.% besteht.

10. Verfahren nach einem der Ansprüche 1 bis 9,
**dadurch gekennzeichnet,**
**dass** das Druckgas aus einem inerten Gas und einem Gas, wie z.B. Argon oder Helium mit einem Anteil von bis zu maximal 5 Vol.% besteht.

11. Druckgas zum Formen von Kunststoffteilen gemäß einem der Ansprüche 1 bis 10,
**dadurch gekennzeichnet,**
**dass** das Druckgas inertes Gas mit einem Anteil von mindestens 50 Vol.% und Funktionsgas mit einem Anteil von maximal 50 Vol.% umfasst.

12. Vorrichtung zum Formen von Kunststoffteilen umfassend,
- eine Einspritzeinrichtung (2),
- eine Form (4), und
- eine Einrichtung zum Zuführen von Druckgas (3),
**dadurch gekennzeichnet,**
**dass** die Einrichtung zum Zuführen von Druckgas (3) eine Mischeinrichtung (23) zum Bereitstellen eines vorbestimmten Verhältnisses aus inertem Gas und Funktionsgas im Druckgas aufweist.

## Geänderte Patentansprüche

### Geänderte Patentansprüche gemäss Regel 137(2) EPÜ.

**1.** Verfahren zum Formen von Kunststoffteilen bei dem eine Formmasse in eine Form eingespritzt, ein Druckgas zum Ausformen der Formmasse in die Form injiziert und die Formmasse durch Abkühlen verfestigt wird,
**dadurch gekennzeichnet,**
**dass** als Druckgas eine Zusammensetzung aus einem inerten Gas, wobei das inerte Gas Stickstoff (N₂) oder Kohlendioxid (CO₂) oder ein Gemisch aus Stickstoff und Kohlendioxid ist und einem oder mehreren Funktionsgasen verwendet wird und das Funktionsgas Wasserstoff (H₂), Kohlenmonoxid (CO) oder Ammoniak (NH₃) oder ein Gemisch aus Wasserstoff und/oder Kohlenmonoxid und/oder oder Ammoniak ist, wobei das Inertgas den überwiegenden Volumenanteil an der Zusammensetzung einnimmt.

**2.** Verfahren nach Anspruch 1,
**dadurch gekennzeichnet,**
**dass** das Funktionsgas zumindest eines aus der Gruppe bestehend aus Wasserstoff, Kohlenmonoxid, Ammoniak, Argon, Helium und/oder einer Kohlenwasserstoffverbindung ist.

**3.** Verfahren nach Anspruch 1 oder 2,
**dadurch gekennzeichnet,**
**dass** das Druckgas bis zu maximal 40 Vol.-%, insbesondere bis zu maximal 30 Vol.-%, insbesondere bis zu maximal 20 Vol.-%, insbesondere bis zu maximal 10 Vol.-% Funktionsgas enthält.

**4.** Verfahren nach einem der Ansprüche 1 bis 3,
**dadurch gekennzeichnet,**
**dass** das Druckgas bis zu maximal 10 Vol.-% Wasserstoff enthält.

**5.** Verfahren nach einem der Ansprüche 1 bis 4,
**dadurch gekennzeichnet,**
**dass** das Druckgas bis zu maximal 40 Vol.% , insbesondere bis zu maximal 20 Vol.-% , insbesondere bis zu maximal 10 Vol.-% Argon und/oder bis zu maximal 40 Vol.-%, insbesondere bis zu maximal 20 Vol.%, insbesondere bis zu maximal 10 Vol.-% Helium enthält.

**6.** Verfahren nach einem der Ansprüche 1 bis 5,
**dadurch gekennzeichnet,**
**dass** das Druckgas bis zu maximal 10 Vol.-% Wasserstoff und/oder bis zu maximal 10 Vol.% Argon und/oder bis zu maximal 10 Vol.-% Helium enthält.

**7.** Verfahren nach einem der Ansprüche 1 bis 6,
**dadurch gekennzeichnet,**
**dass** das Druckgas bis zu maximal 10 Vol.-% Wasserstoff und/oder bis zu maximal 10 Vol.-% Argon und/oder bis zu maximal 10 Vol.-% Helium und/oder bis zu maximal 10 Vol.-% einer Kohlenwasserstoffverbindung enthält.

**8.** Verfahren nach einem der Ansprüche 1 bis 7,
**dadurch gekennzeichnet,**
**dass** das Druckgas aus einem inerten Gas und einem reduzierenden Gas, wie z.B. Wasserstoff oder Ammoniak mit einem Anteil von bis zu maximal 5 Vol.% besteht.

**9.** Verfahren nach einem der Ansprüche 1 bis 8,
**dadurch gekennzeichnet,**
**dass** das Druckgas aus einem inerten Gas und einem Gas, wie z.B. Argon oder Helium mit einem Anteil von bis zu maximal 5 Vol.% besteht.

**10.** Druckgas zum Formen von Kunststoffteilen gemäß einem der Ansprüche 1 bis 9, **dadurch gekennzeichnet,**
**dass** das Druckgas inertes Gas mit einem Anteil von mindestens 50 Vol.% und Funktionsgas mit einem Anteil von maximal 50 Vol.% umfasst.

**11.** Vorrichtung zum Formen von Kunststoffteilen nach dem Gasinjektionsverfahren umfassend,
- eine Einspritzeinrichtung (2),
- eine Form (4), und
- eine Einrichtung zum Zuführen von Druckgas (3),
**dadurch gekennzeichnet,**
**dass** die Einrichtung zum Zuführen von Druckgas (3) eine Mischeinrichtung (23) zum Bereitstellen eines vorbestimmten Verhältnisses aus inertem Gas und Funktionsgas nach einem der Ansprüche 1 bis 10 im Druckgas aufweist.
